# EUROPÄISCHE PATENTSCHRIFT

(11) **EP 2 151 458 B1**
(45) Veröffentlichungstag und Bekanntmachung des Hinweises auf die Patenterteilung: **20.06.2012**
(21) Anmeldenummer: 09009846.8
(22) Anmeldetag: 30.07.2009
(51) Int. Cl.: C08G 18/40, C08G 18/48

(54) **Kunststoffformteile aus Polyurethan und deren Verwendung**
Plastic moulded parts made of polyurethane and their usage
Pièces de formage en plastique composées de polyuréthane et leur utilisation

(30) Priorität: 07.08.2008 DE 102008036995
(43) Veröffentlichungstag der Anmeldung: 10.02.2010
(73) Patentinhaber: Bayer MaterialScience AG, 51368 Leverkusen (DE)
(72) Erfinder: Merkel, Michael, Dr., 40223 Düsseldorf (DE); Eisen, Norbert, Dr., 50999 Köln (DE); Liebegott, Lutz, 51379 Leverkusen (DE); Gansen, Günter, 41472 Neuss (DE)

(56) Entgegenhaltungen:
- EP-A1- 1 671 993
- WO-A1-2004/111101
- WO-A1-2008/025470

## Beschreibung

Die Erfindung betrifft kompakte Kunststoffformteile mit Rohdichten von >1000 kg/m³, hoher Zähigkeit, Biegefestigkeit und hohem Wärmestand sowie deren Verwendung.

In EP-A 1 671 993, US 4 299 924 sowie EP-A 0 102 541 wird die Herstellung von Polyurethan- bzw. Polyisocyanurat-Materialien mit hohem Wärmestand, hoher Zähigkeit und hoher Biegefestigkeit beschrieben. Hierzu werden Füllstoff enthaltende Polyolkomponenten (PHD-Polyole, PIPA-Polyole oder SAN-Polyole) verwendet. Die hohe Viskosität der eingesetzten Polyole bedingt jedoch eine sehr schlechte Vermischbarkeit mit den Isocyanaten. Darüber hinaus sind die Anforderungen an die Maschinentechnik sehr hoch.

In EP-A 0 922 063 werden Polyurethan-Gießsysteme mit einer hohen Wärmeformbeständigkeit beschrieben, die durch die Reaktion von Polyisocyanaten und Polyolen bei hoher Kennzahl entstehen. Nachteilig sind hier die lange Entformzeit von bis zu einer Stunde sowie der anschließende, aufwändige und energieintensive Temperungs-Prozess über mehrere Stunden bei Temperaturen von über 100°C.

In WO 2004/111101 A1 werden Polyurethan-Materialien beschrieben, die eine hohe Zähigkeit, einen hohen Wärmestand sowie eine hohe Biegefestigkeit besitzen. Die Polyolkomponente zur Herstellung solcher Materialien besteht zu 80 bis 100 % aus Polyether-Polyolen, die einen Ethylenoxid-Anteil von mehr als 75 Gew.-% und ein Äquivalentgewicht von 150 bis 1000 aufweisen.

In WO 2007/042407 A1 werden Polyurethan-Elastomere offenbart, für deren Herstellung als Haupt-Polyolkomponente ein Polyol mit einem hohen Ethylenoxid-Anteil und mit Äquivalentgewichten von 1100 bis 5000 verwendet wird.

Die Schlagzähigkeit der Elastomere aus den beiden vorgenannten internationalen Anmeldungen ist allerdings nicht besonders gut, so dass sie für viele Anwendungen, insbesondere im Nutzfahrzeugbereich, nicht geeignet sind.

Die Aufgabe der vorliegenden Erfindung war es, unter Vermeidung des Einsatzes von Füll- und Verstärkungsstoffen und den damit verbundenen Nachteilen, die Schlagzähigkeit unter weitgehender Beibehaltung von Biegesteifigkeit und Wärmebeständigkeit zu erhöhen und trotz langer Schusszeiten schnell härtende Formteile herzustellen, die keiner Temperung bedürfen.

Diese Aufgabe konnte mit den erfindungsgemäßen, im Folgenden näher beschriebenen Kunststoffformteilen gelöst werden.

Gegenstand der vorliegenden Erfindung sind kompakte Kunststoffformteile aus Polyurethanen, die Rohdichten von > 1000 kg/m³ sowie hohe Zähigkeit, Biegefestigkeit und Wärmestand aufweisen, wobei das Polyurethan erhältlich ist aus
a) organischen Polyisocyanaten und/oder Polyisocyanatprepolymeren
b) Polyolkomponenten
c) mindestens einem Katalysator
d) gegebenenfalls Stabilisatoren
e) gegebenenfalls Hilfs- und Zusatzstoffen
dadurch gekennzeichnet, dass die füllstofffreie Polyolkomponente b) ein Gemisch aus 21 bis 70 Gew.-% eines Polyetherpolyols b1) mit einer Funktionalität von 2 bis 6, einem Äquivalentgewicht von 210 bis 2100 und 10 bis 74 Gew.-% Ethylenoxid-Gruppen, bezogen auf das Gesamtgewicht des Polyols, wobei der Anteil der primären Hydroxylgruppen größer als 50 %, bevorzugt größer als 70 % ist, und 30 bis 79 Gew.-% eines von b1) verschiedenen Polyetherpolyols b2) mit einem Äquivalentgewicht von 210 bis 2100, einem Ethylenoxid-Anteil von mehr als 75Gew.-% und einer Funktionalität von 2 bis 6 enthält, und der Isocyanat-Index zwischen 400 und 2000 liegt.

Die eingesetzten Polyole b2) sind an sich dem Fachmann bekannt und beispielsweise in G. Oertel Kunststoffhandbuch, Band 7, Carl Hanser Verlag, 3. Auflage, München/Wien 1993, Seiten 57 bis 75 näher beschrieben. Bevorzugt werden Polyether- und Polyesterpolyole eingesetzt. Der Aufbau der Polyetherketten kann in bekannter Weise durch Alkoxylierung von entsprechenden Starterverbindungen erfolgen, wobei als Alkoxylierungsagenzien bevorzugt Ethylenoxid und/oder Propylenoxid und/oder Butylenoxid verwendet werden. Als Starter werden vorzugsweise hydroxyl-und/oder amingruppenhaltige Verbindungen eingesetzt, die eine Starterfunktionalität von 2 bis 6 aufweisen. Bevorzugt werden Polyalkohole als Starter verwendet. Beispielsweise kommen als Starterverbindungen Sorbit, Succrose, Pentaerythrit, Glycerin, Trimethylolpropan, Propylenglycol, Ethylenglycol, Butylenglycol, Ethylendiamin, Toluylendiamin oder Wasser oder Mischungen davon in Betracht. Die eingesetzten Startergemische weisen ebenfalls eine mittlere Funktionalität von 2 bis 6 auf. Vorzugsweise werden Polyetherpolyole mit einem Ethylenoxid-Anteil von mehr als 75 Gew.-% als Polyol b2) eingesetzt.

Als Ausgangskomponente a) werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136 beschrieben werden, beispielsweise solche der Formel

Q(NCO)ₙ

in der
- n: 2 bis 4, vorzugsweise 2 bis 2,4
und
- Q: einen aliphatischen Kohlenwasserstoffrest mit 2 bis 18, vorzugsweise 6 bis 10 C-Atomen,
einen cycloaliphatischen Kohlenwasserstoffrest mit 4 bis 15, vorzugsweise 5 bis 10 C-Atomen,
einen aromatischen Kohlenwasserstoffrest mit 6 bis 15, vorzugsweise 6 bis 13 C-Atomen,
oder einen araliphatischen Kohlenwasserstoffrest mit 8 bis 15, vorzugsweise 8 bis 13 C-Atomen
bedeuten. Solche Polyisocyanate werden beispielsweise in DE-A 2 832 253, Seiten 10 bis 11 beschrieben.

Besonders bevorzugt werden in der Regel die technisch leicht zugänglichen Polyisocyanate, z.B. 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich von 4,4' und/oder 2,4'-Diphenylmethandiisocyanat ableiten. Der Gehalt an den vorgenannten Gruppen zur Modifizierung des Polyisocyanates kann bis zu 30 Gew.-%, bezogen auf das eingesetzte Polyisocyanat, betragen. Auch Mischungen der vorgenannten Polyisocyanate können eingesetzt werden. Vorzugsweise werden als Polyisocyanate Mischungen aus isomeren Diphenylmethan-diisocyanaten oder Mischungen aus isomeren Diphenylmethan-diisocyanaten und Polyphenyl-polymethylen-polyisocyanaten verwendet. Diese Gemische weisen vorzugsweise gemittelte Funktionalitäten zwischen 2 und 2,4 auf.

Als Katalysatoren c) kommen alle für die Herstellung von Polyurethanen bekannten Katalysatoren bzw. Katalysatorsysteme in Betracht. In diesem Zusammenhang wird auf das Kunststoffhandbuch (Hrsg. G. Oertel), Band 7, Polyurethane, Carl Hanser Verlag, 3. Auflage, München/Wien 1993, Seiten 104 ff. verwiesen. Bevorzugt werden die an sich bekannten Alkali- oder Ammoniumcarboxylate, wie z.B. Kaliumacetat, Kalium 2-ethylhexanoat eingesetzt. Es können auch mehrere Katalysatoren in Kombination eingesetzt werden.

Als Stabilisatoren d) werden bevorzugt modifizierte Polyethersiloxane verwendet, wie sie im oben genannten Kunststoffhandbuch, Band 7, Seiten 113 bis 115 beschrieben sind.

Als Hilfs- und Zusatzstoffe e) kommen Inhibitoren, Tenside, Emulgatoren, Zellregler, Flammschutzmittel, Alterungsschutzmittel, Trennmittel, Farbmittel und Lichtschutzmittel in Frage. Diese sind im Kunststoffhandbuch, Band 7, Seiten 104 bis 127 offenbart.

Der Isocyanat-Index liegt zwischen 400 und 2000, besonders bevorzugt zwischen 500 und 1000. Der Isocyanat-Index ist das Verhältnis der NCO-Gruppen zu gegenüber Isocyanaten reaktiven Wasserstoffatomen multipliziert mit 100.

Die Herstellung der erfindungsgemäßen Teile erfolgt in einer Form. Vorzugsweise ist die Form geschlossen. Die Form hat eine Temperatur zwischen Raumtemperatur und 150°C, bevorzugt 60 bis 100°C. Die Reaktionskomponenten werden mit einer Temperatur zwischen Raumtemperatur und 80°C vermischt und in die Form gefüllt. Vorzugsweise erfolgt die Herstellung nach der bekannten Reaktionsspritzgusstechnik (RSG-Verfahren, RIM-Prozess), wie sie beispielsweise in DE-A 2 622 951 (US 4 211 853) oder DE-A 3 914 718 beschrieben ist, oder in einem Gießprozess. Die Formstandzeit beträgt je nach Katalysator und Formteilgeometrie weniger als 10 Minuten, bevorzugt 30 bis 300 Sekunden. Zur Verbesserung der Entformungseigenschaften können die Innenwände der Form mit bekannten Trennmitteln beschichtet werden. Eine Temperung der Teile bei erhöhten Temperaturen ist nicht erforderlich.

Die erfindungsgemäßen Kunststoffformteile werden z.B. für großflächige, insbesondere wärmebelastete Teile in der Automobil- und Nutzfahrzeug-Industrie, verwendet.

Die Erfindung soll anhand der nachfolgenden Beispiele näher erläutert werden.

### Beispiele

### Herstellungsvorschrift:

Die Ausgangskomponenten, die in der nachfolgenden Tabelle 1 aufgeführt sind, wurden in den entsprechenden Mengen bei einer Temperatur von etwa 30°C gemischt und mittels Reaktionsspritzgusstechnik in eine auf etwa 70°C vorgeheizte, temperierte, geschlossene Metallform eingebracht. Danach wurden die so hergestellten Platten einer Dicke von 4 mm nach 90 Sekunden entformt und ohne weitere Temperung untersucht. Die Untersuchungsergebnisse sind der Tabelle 1 zu entnehmen.

**Tabelle 1:**

| **Beispiel Nr.** | **1*** | **2*** | **3** | **4** | **5** | **6*** | **7*** |
|---|---|---|---|---|---|---|---|
| Polyether 1 [Gew.-Teile] | 100,0 | | | | | | |
| Polyether 2 [Gew.-Teile] | | 100,0 | 75,0 | 60,0 | 40,0 | | |
| Polyether 3 [Gew.-Teile] | | | 25,0 | 40,0 | 60,0 | 100,0 | |
| SAN-Dispersion 1 [Gew.-Teile] | | | | | | | 100,0 |
| Katalysator [Gew.-Teile] | 0,4 | 0,4 | 0,4 | 0,4 | 0,4 | 0,4 | 0,7 |
| Isocyanat 1 [Gew.-Teile] | 150,0 | 150,0 | 150,0 | 150,0 | 150,0 | 150,0 | 150,0 |
| Rohdichte [kg/m³] | 1233 | 1233 | 1228 | 1235 | 1234 | 1231 | 1227 |
| Biegemodul gemäß DIN EN ISO 178 [N/mm²] | 2200 | 2013 | 1792 | 1608 | 1517 | 1501 | 1439 |
| Charpy-Schlagzähigkeit nach DIN EN ISO 179 [KJ/mm²] | 61,9 | 65,3 | 82,3 | 78,2 | 72,4 | 46,6 | 12,1 |
| Anteil der nicht gebrochenen Prüfkörper | 0% | 30% | 70% | 70% | 70% | 0% | 0% |
| HDT (heat deflection temperature) gemäß DIN EN ISO 75-1/2 [°C] | 99 | 114 | 137 | 138 | 138 | 145 | 178 |

| | | | | | | | |
|---|---|---|---|---|---|---|---|
| *Vergleichsbeispiele: Beispiele 1 und 2 gemäß WO 2004/111101 A1; Beispiel 6 gemäß WO 2007/042407 A1; Beispiel 7 gemäß EP-A 1 671 993. | | | | | | | |

### Polyether 1:

Polyether mit einer OH-Zahl von 255 mg KOH/g, einer Funktionalität von 3, einem Propylenoxid-Gehalt von 0,9 Gew.-%, einem Ethylenoxid-Gehalt von 78,8 Gew.-%; hergestellt durch Alkoxylierung von Trimethylolpropan.

### Polyether 2:

Polyether mit einer OH-Zahl von 100 mg KOH/g,-einer Funktionalität von 6, einem-Propylenoxid-Gehalt von 17,3 Gew.-%, einem Ethylenoxid-Gehalt von 77,3 Gew.-%; hergestellt durch Alkoxylierung von Sorbit.

### Polyether 3:

Polyether mit einer OH-Zahl von 37 mg KOH/g, einer Funktionalität von 3, einem Propylenoxid-Gehalt von 26,8 Gew.-%, einem Ethylenoxid-Gehalt von 71,2 Gew.-%, mit 83 % primären OH-Gruppen; hergestellt durch Alkoxylierung von Glyzerin.

### SAN-Dispersion 1:

Styrol-Acrylnitril-Dispersion mit einem SAN-Gehalt von 25 Gew.-% (Acrylnitril/Styrol 25/75) in einem trifunktionellen Polyether mit überwiegend primären OH-Gruppen und einer OH-Zahl von 27.

### Katalysator:

Kaliumacetat, 25 %-ig in Diethylenglycol.

### Isocyanat 1:

Carbodiimid/Uretonimin-modifiziertes 4,4'-Diphenylmethandiisocyanat mit einem NCO-Gehalt von 29,5 Gew.-% und einem Carbodiimid/Uretonimin-Gehalt von 25 Gew.-%.

Überraschenderweise zeigen die erfindungsgemäßen Polyurethan-Formteile (Beispiele 3 bis 5) eine deutlich erhöhte Charpy-Schlagzähigkeit. In Verbindung mit der ebenfalls hohen Biegesteifigkeit (Biegemodul) und Wärmeformbeständigkeit (HDT) eignen sich die erfindungsgemäßen Formteile besonders gut für die Verwendung in großflächigen, wärmebelasteten Formteilen, die eine hohe Zähigkeit erfordern.

## Patentansprüche

1. Kompakte Kunststoffformteile aus Polyurethanen mit Rohdichten von > 1000 kg/m³ sowie hoher Zähigkeit, Biegefestigkeit und Wärmestand, wobei das Polyurethan erhältlich ist aus
a) organischen Polyisocyanaten und/oder Polyisocyanatprepolymeren
b) Polyolkomponenten
c) mindestens einem Katalysator
d) gegebenenfalls Stabilisatoren
e) gegebenenfalls Hilfs- und Zusatzstoffen
**dadurch gekennzeichnet, dass** die füllstofffreie Polyolkomponente b) ein Gemisch aus 21 bis 70 Gew.-% eines Polyetherpolyols b1) mit einer Funktionalität von 2 bis 6, einem Äquivalentgewicht von 210 bis 2100 und 10 bis 74 Gew.-% Ethylenoxid-Gruppen, bezogen auf das Gesamtgewicht des Polyols, wobei der Anteil der primären Hydroxylgruppen größer als 50 %, bevorzugt größer als 70 % ist, und 30 bis 79 Gew.-% eines von b1) verschiedenen Polyetherpolyols b2) mit einem Äquivalentgewicht von 210 bis 2100, einem Ethylenoxid-Anteil von mehr als 75 Gew.-% und einer Funktionalität von 2 bis 6 enthält, und der Isocyanat-Index zwischen 400 und 2000 liegt.

2. Kunststoffformteile gemäß Anspruch 1, **dadurch gekennzeichnet, dass** der Isocyanat-Index zwischen 500 und 1000 liegt.

3. Kunststoffformteile gemäß Anspruch 1, **dadurch gekennzeichnet, dass** als Polyisocyanate Mischungen aus isomeren Diphenylmethan-diisocyanaten oder Mischungen aus isomeren Diphenylmethan-diisocyanaten und Polyphenyl-polymethylen-polyisocyanaten verwendet werden.

4. Kunststoffformteile gemäß Anspruch 1, **dadurch gekennzeichnet, dass** die gemittelte Funktionalität des Polyisocyanats zwischen 2 und 2,4 liegt.

5. Verwendung der Kunststoffformteile gemäß Anspruch 1 bei der Herstellung von großflächigen Teilen für die Automobil- und Nutzfahrzeug-Industrie.

## Claims

1. Compact plastics mouldings made of polyurethanes with envelope densities > 1000 kg/m³, and also with high toughness, flexural strength and heat resistance, where the polyurethane is obtainable from
a) organic polyisocyanates and/or polyisocyanate prepolymers
b) polyol components
c) at least one catalyst
d) optionally stabilizers
e) optionally auxiliaries and additives
**characterized in that** the filler-free polyol component b) comprises a mixture of from 21 to 70% by weight of a polyether polyol b1) with functionality from 2 to 6, and with equivalent weight from 210 to 2100 and from 10 to 74% by weight of ethylene oxide groups, based on the total weight of the polyol, where the proportion of the primary hydroxy groups is greater than 50%, preferably greater than 70%, and of from 30 to 79% by weight of a polyether polyol b2) differing from b1) with equivalent weight from 210 to 2100, and with ethylene oxide content of more than 75% by weight and functionality from 2 to 6, and the isocyanate index is from 400 to 2000.

2. Plastics mouldings according to Claim 1, **characterized in that** the isocyanate index is from 500 to 1000.

3. Plastics mouldings according to Claim 1, **characterized in that** polyisocyanates used comprise mixtures of isomeric diphenylmethane diisocyanates or a mixture of isomeric diphenylmethane diisocyanates and of polyphenyl polymethylene polyisocyanates.

4. Plastics mouldings according to Claim 1, **characterized in that** the average functionality of the polyisocyanate is from 2 to 2.4.

5. Use of the plastics mouldings according to Claim 1 in the production of large-surface-area parts for the automobile and commercial-vehicle industry.

## Revendications

1. Pièces moulées en plastique compactes à base de polyuréthanes ayant des densités apparentes > 1 000 kg/m³, ainsi qu'une ténacité, résistance à la flexion et résistance à la chaleur élevées, le polyuréthane pouvant être obtenu à partir de
a) des polyisocyanates organiques et/ou des prépolymères de polyisocyanates,
b) des composants polyol,
c) au moins un catalyseur,
d) éventuellement des stabilisateurs,
e) éventuellement des adjuvants et additifs,
**caractérisées en ce que** le composant polyol exempt de charges b) contient un mélange de 21 à 70 % en poids d'un polyéther-polyol b1) ayant une fonctionnalité de 2 à 6, un poids équivalent de 210 à 2 100 et de 10 à 74 % en poids de groupes oxyde d'éthylène, par rapport au poids total du polyol, la proportion des groupes hydroxyle primaires étant supérieure à 50 %, de préférence supérieure à 70 %, et de 30 à 79 % en poids d'un polyéther-polyol b2) différent de b1) ayant un poids équivalent de 210 à 2 100, une proportion d'oxyde d'éthylène supérieure à 75 % en poids et une fonctionnalité de 2 à 6, et l'indice d'isocyanate est compris entre 400 et 2 000.

2. Pièces moulées en plastique selon la revendication 1, **caractérisées en ce que** l'indice d'isocyanate est compris entre 500 et 1 000.

3. Pièces moulées en plastique selon la revendication 1, **caractérisées en ce que** des mélanges de diisocyanates de diphénylméthane isomères ou des mélanges de diisocyanates de diphénylméthane isomères et de polyisocyanates de polyphényl-polyméthylène sont utilisés en tant que polyisocyanates.

4. Pièces moulées en plastique selon la revendication 1, **caractérisées en ce que** la fonctionnalité moyenne du polyisocyanate est comprise entre 2 et 2,4.

5. Utilisation des pièces moulées en plastique selon la revendication 1 pour la fabrication de pièces de grande superficie pour l'industrie des véhicules automobiles et utilitaires.
